# EUROPEAN PATENT SPECIFICATION

(11) **EP 4 607 106 B1**
(45) Date of publication and mention of the grant of the patent: **25.11.2026**
(21) Application number: 25189755.9
(22) Date of filing: 15.07.2020
(51) Int. Cl.: F24T 10/00, E21B 33/138, E21B 43/30, E21B 36/00

(54) **METHOD FOR CONFIGURING WELLBORES IN A GEOLOGIC FORMATION**
VERFAHREN ZUR KONFIGURATION VON BOHRLÖCHERN IN EINER GEOLOGISCHEN FORMATION
PROCÉDÉ DE CONFIGURATION DE PUITS DE FORAGE DANS FORMATION GÉOLOGIQUE

(43) Date of publication of application: 27.08.2025
(62) Document number(s) of the earlier application(s) in accordance with Art. 76 EPC: 20945101.2 / 4 182 615
(73) Proprietor: Eavor Technologies Inc., Calgary, AB T2R 0K1 (CA)
(72) Inventor: TOEWS, Matthew, Calgary AB T2R 0K1 (CA); CAIRNS, Paul, Calgary AB T2R 0K1 (CA); RIDDELL, Derek, Calgary AB T2R 0K1 (CA); CURTIS-SMITH, Andrew, Calgary AB T2R 0K1 (CA); HALE, Jonathan, Calgary AB T2R 0K1 (CA)
(74) Representative: Fish & Richardson P.C.

(56) References cited:
- DE-A1- 102010 006 141
- DE-B3- 102005 036 472
- KR-A- 20180 013 355
- US-A1- 2012 174 581
- US-A1- 2020 011 151

## Description

### TECHNICAL FIELD

The present invention relates to configuring wells within a thermally productive geologic formation and more particularly, the present invention relates to optimizing drilling in a formation to facilitate well positioning to maximize recovery of thermal energy from a specific formation thermal gradient.

### BACKGROUND ART

With the advent of improved drilling techniques for drilling to greater depths in a formation and higher toleration of temperatures, numerous advances have been made to allow for the formation of specific well configurations.

To elevate the efficiency of well positioning the unification of drilling techniques, working fluid chemistry, wellbore conditioning unit operations together with flow rate, sequencing inter alia must be combined to achieve efficient heat recovery in the most complex and varied thermal gradients in a given formation.

The present invention facilitates the ability to recover thermal energy regardless of thermal gradient anomalies and complexities.

In terms of the evolution of the art, one of the earlier developments is realized in Moe, United States Patent No. 6,247,313, issued June 19, 2001. There is disclosure regarding a wellbore configuration which includes a plurality of heat absorbing holes within a geothermal area. The disclosure is silent regarding casing or liners, however it is limited to utilization of a fractured zone, angular disposition of the heat absorbing holes being parallel to each other and further limitations. The teachings specifically state:
"The magnitude of the sloping angle will depend on several factors, for instance the temperature gradient in the rock, the length of the heat absorbing hole and the water flow rate. Calculating the angle will be well within the capabilities of the skilled person and will therefore not be detailed here. The angle would normally lie between 20° and 50°, preferably it will be about 40°.

Furthermore, in order to maximize the extraction of heat from a given volume of rock, at least substantial parts of the heat absorbing holes extend parallel to each other. More preferably, the heat absorbing holes are arranged in one layer or, if necessary, in a plurality of vertically spaced layers. Providing an array of vertically spaced layers, each layer having a plurality of heat absorbing holes, allows for increasing the capacity of the plant without spreading the holes over a wide area. This is of considerable importance if the volume of earth available for exploitation is not large.

The supply and return holes 3, 4 are interconnected by four heat absorbing holes 5, each having a diameter of 10 cm and being approximately 2000 m long. The spacing between these holes 5 may be 100-150 m. They have been drilled starting out from the supply hole 3 and terminate at or near the return hole 4. A fracture zone 6 has been established in this area to provide flow communication between the holes 4 and 5 since it would be difficult to hit the return hole 4 directly when drilling the heat absorbing holes 5."

The teachings also teach a difficulty regarding the connection of the inlet and outlet as emphasized. As a disadvantage, the Moe arrangement would not provide sufficient teaching regarding unrestricted access to a gradient regardless of its anomalies and thus the disclosure is limited to specific scenarios.

In United States Patent No. 5,515, 679, issued May 14, 1996, Shulman. The document teaches a closed loop thermal energy recovery arrangement in a variety of rock types at higher temperatures, one of which is solid rock which is differentiated in the disclosure of Shulman:
"This invention relates to novel methods and apparatus employing liquid circulation in a closed pipe loop system by which the thermal energy in subterranean hot rock is extracted, i.e. mined, and brought to the surface for utilization. Said hot rock may be solid, fissured or fractured and dry or wet but essentially free of mobile fluid. By this invention, the thermal energy is transferred from the hot rock to relatively cold liquid flowing in one or more of a plurality of distantly separated heat conducting pipe loops that descend from a manifold at the surface into the hot rock and then join together with the bottom of a riser through which the heated fluid returns to the surface."

The wellbore configurations are not discussed in any details with complex patterns or disposition of the heat recovering conduits. The arrangement relies on piping in the wellbore configuration for fluid transportation through the arrangement for thermal recovery from the formation. Another disadvantage is seen by the positioning of the manifold on the surface rather than inherently within a downhole network of wellbores.

Brown, in United States Patent No. 6,668, 554, issued December 30, 2003, teaches a fracturing process for forming a fractured zone in hot dry rock. Super critical CO2 is used as a working fluid to convey the absorbed energy from the geothermal formation. The fluid communication is not in a closed loop where there is an interconnecting segment in fluid communication between an inlet well and an outlet well where the working fluid is isolated from the formation. In the Brown arrangement, the formation itself indiscriminately communicates with the inlet and outlet wells. This is further evinced by the fact that Brown teaches:
" Finally, the hot dry rock circulating system is completed by drilling the two or more production wells to intersect the reservoir near each end of the elongated reservoir region as defined by the "cloud" of microseismic event locations defining the shape of the fractured hot dry rock reservoir. All the wells would be appropriately completed with casing to the surface and then purged of drilling fluids and other water-based materials, again using gaseous carbon dioxide."

From this passage the use of casing is identified as is an intersection of wells, but not with each other as in a closed loop, but rather with a man-made reservoir within the formation.

United States Patent No. 10,260,778, Sonju, issued April 16, 2019 discloses a geothermal plant. There are teachings in the patent regarding specific requirements for the production sections of the configuration being in a specific disposition relative to a concentric inlet/outlet well arrangement. The disclosure does not provide instruction regarding conditioning of the wellbores during or after drilling or possible directions for interconnecting segments to exploit the thermally productive zone without restriction.

Muir et al, in United States Patent No. 10, 527,026, issued January 7, 2020, teach a closed loop heat recovery arrangement for transferring heat from a well casing into the fluid. The text indicates:
"Embodiments disclosed herein are directed towards methods and apparatus for the production of power from a non-permeable geological resource, through the use of a closed loop design, where the fluid is fully isolated from the formation in a closed loop well and heat is transferred through the well casing into the fluid. "
" As described in the background section above, typical hydrothermal systems, as well as closed loop systems, have been focused on extracting heat from permeable geological resources where fractures or porosity occur either naturally or through stimulation. In contrast, embodiments disclosed herein may efficiently and effectively extract heat from low-permeability rock, such as rock in the plastic zone. Geologic formations including higher temperature low-permeable rock are advantageously used by passing a fluid through the resource without direct contact between the fluid and the rock, whereby heat is transferred directly from the rock through the well casing into the fluid."
"A closed loop geothermal heat exchange system may then be disposed within the subterranean formation based on the determined temperature profile and the determined heat replenishment profile of the subterranean formation. Emplacement of the closed loop geothermal heat exchange system may include drilling, casing, perforating, cementing, expanding uncased well walls with fractures, sealing uncased well walls and other steps associated with a drilling process and emplacement of a well loop therein as known to one skilled in the art. The emplacing may include, in some embodiments, disposing a heat exchange zone of the closed loop well system within a plastic zone or a brittle-ductile transition zone of the formation. In some embodiments, the emplacing may include or additionally include disposing a heat exchange zone of the closed loop well system within a brittle zone of the formation, as well as stimulating the brittle zone proximate the heat exchange zone."

The text provides a general teaching regarding sealing, but includes casing in the heat recovering sections of the wellbore configuration. The text indicates:
"According to some embodiments, methods for producing geothermal energy described herein may include portions of wells that are not cased with metal pipe but, instead, the walls of such portions may be formation rock that has been sealed with hardened sealant and the well wall in such portions being defined by the boundary of such hardened sealant which, in some embodiments, will cause the diameter of the well in such portions to be larger, and in some cases much larger, than in the metal cased portion of such wells."

The reference mirrors the teachings of Shulman, *supra*, and does not provide instruction regarding intersection of wells, the absence of casing and/or liners or geometric variation in the disposition of the heat recovering segments of the wellbore arrangement to accommodate any thermal gradient pattern.
US 2012/174581 A1 describes a system including at least one pipe system defining a closed-loop fluid conduit configured to circulate a fluid into a cased well and through at least a portion of a subterranean thermal reservoir to heat the fluid. The system further includes a thermal power system coupled to the at least one pipe system and configured to generate electricity from heat carried by the fluid.
DE 10 2005 036472 B3 describes a heat exchanger producing process. The process involves making two deep borings which are impermeable to liquid underground, and connecting them to each other, by using an expandable liner and heat-conductivity-increasing cement. The water goes down one boring and up another, then through a heat exchanger.
DE 10 2010 006141 A1 describes a system for tapping or producing geothermal energy comprising: a first subterranean, usable area having geothermal energy, a predetermined first tapping site associated with the first usable area, a first fluid connecting line for tapping energy in accordance with said association, said line being designed between the first tapping site and the first usable region, at least one second or other subterranean, usable region having geothermal energy, and a first fluid connecting line for tapping energy not in accordance with the association designed between the first tapping site and the second usable region.
KR 2018 0013355 A describes a deep geothermal power generation system using an artificial reservoir geothermal method. The deep geothermal power generation system comprises a pump system and a power plant formed on the ground surface to generate electric power. The system further comprises: a supply unit connected to the pump system and extended from the ground surface to a geothermal heat collection layer placed in a deep position to supply water supplied from the pump system to the geothermal heat collection layer and to form an artificial reservoir with a geothermal water heated by the geothermal heat of the geothermal heat collection layer; a vertical production well distanced from the supply unit to be drilled from the ground surface down to the geothermal heat collection layer and to collect geothermal water of the artificial reservoir to the power plant through an operation of the pump system; and a radial down hole drilled from an end unit of the vertical production well towards an end unit of the supply unit to provide a collection path of geothermal water collected to the vertical production well and to be formed radially by being plural around the supply unit, thereby extending the collection path of the artificial reservoir.
US 2020/011151 A1 describes wellbore synthesis techniques, wherein open hole drilled wellbores are sealed while drilling to form an impervious layer at the wellbore/formation interface. The techniques may be chemical, thermal, mechanical, biological and are fully intended to irreversibly damage the formation in terms of the permeability thereof. With the permeability negated, the wellbore may be used to create a closed loop surface to surface geothermal well operable in the absence of well casing. Further, formulations for the working and drilling fluids are described.

It would be desirable to have a method of forming a wellbore configuration that can be user adapted to the anomalies of the gradient pattern as opposed to being confined to specific wellbore designs that are adapted to the limitations of the existing equipment and methods for recovering thermal energy.

The present inventive methods disclosed herein after ameliorate the noted limitations and provide previously unseen degrees of freedom to efficiently capture thermal energy from within a thermally productive formation.

### SUMMARY OF THE INVENTION

One object of one embodiment of the present invention is to provide an improved method for configuring wells and well systems in a thermally productive formation for recovery of thermal energy there from for subsequent use.

The invention is defined by the appended claims.

Having thus generally described the invention, reference will now be made to the accompanying drawings, illustrating preferred embodiments.

### BRIEF DESCRIPTION OF THE DRAWINGS

Figure 1 is a schematic illustration of a closed loop energy recovery arrangement;
Figure 2 is a coordinate system illustrating the possible positions of an interconnecting segment or segment group within the volume of a formation to have thermal energy recovered therefrom;
Figure 3 is a flow chart delineating the steps involved in forming a wellbore configuration by drilling intersection of at least two points;
Figure 4 is a cross section of a wellbore variation;
Figure 5 is side view of Figure 4;
Figure 6 is an alternate embodiment of Figure 5;
Figure 7 is an embodiment of a wellbore configuration;
Figure 8 is an alternate embodiment of a wellbore configuration;
Figure 9 is a further alternate embodiment of a wellbore configuration;
Figure 10 is a further alternate embodiment of a wellbore configuration;
Figure 11 is a further alternate embodiment of a wellbore configuration;
Figure 12 is a further alternate embodiment of a wellbore configuration;
Figure 13 is a schematic illustration of a system of wellbore configurations within a formation;
Figure 14 is a schematic illustration of a network of sectored wellbore configurations;
Figure 15 is schematic illustration of a wells system illustrating the detritus segments;
Figure 16 is a schematic illustration of stacked wells in a modular format;
Figure 16A is an alternate embodiment of Figure 16;
Figure 17 is a schematic illustration of a well system where there is interconnection between auxiliary segments; and
Figure 18 is a schematic illustration of a network of well systems integrated with an electrical grid

Similar numerals used in the Figures denote similar elements.

### INDUSTRIAL APPLICABILITY

The technology has applicability in the wellbore formation, drilling and energy recovery areas of technology.

### BEST MODE FOR CARRYING OUT THE INVENTION

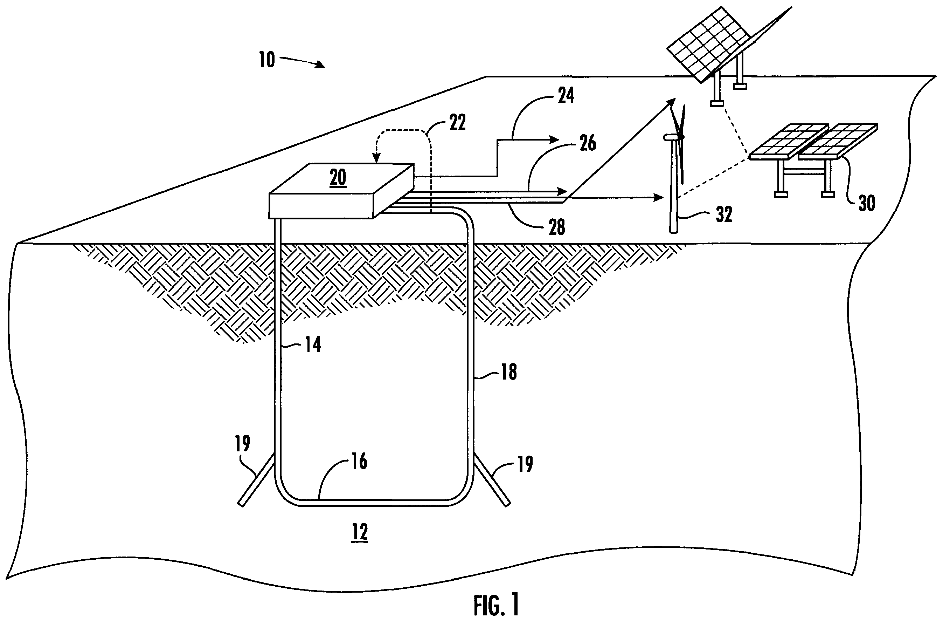

Referring to Figure 1, shown is a schematic representation of a closed loop well system 10 disposed within a thermally productive formation 12. The system 10 includes an inlet well 14, an interconnecting well segment 16 and an outlet well 18 in closed loop fluid communication with an energy processing device 20 positioned on the surface, S. The outlet well may be co-located with the inlet well at the device 20 or located distally as shown by the dashed line 22 for alternate connection. A working fluid is circulated through the system 10 in order to absorb thermal energy from within the formation 12.

For efficiency, the interconnecting well segment 16 is not cased or lined and does not include any other pipe or related mechanical arrangements. The outlet well 18 and inlet well 16 may be cased or otherwise made to comply with accepted practices known to those skilled in the art. Any detritus that evolves from use of the arrangement may be collected in segments 19.

Energy processing device 20 may process the energy for other uses broadly denoted by numeral 24, stored at 26 or passed on to an electrical grid 28 which optionally may include solar devices 30 and/or wind devices 32 in any suitable combination.

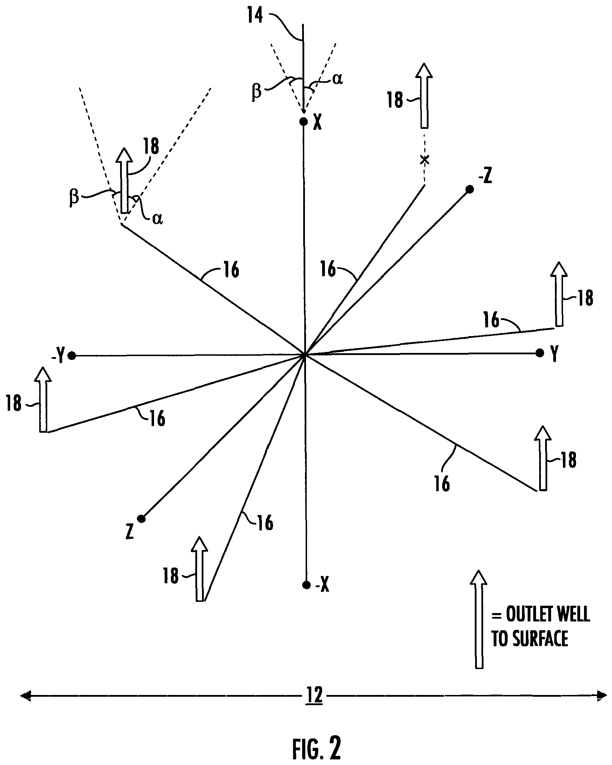

In respect of the spatial orientation of the wells within a thermally productive formation, reference may be had to Figure 2. In the illustration, elements have been removed for clarity, however it will be understood that the illustration is to convey the disposition of the interconnecting segment 16 may have relative to at least one of the plane of the inlet well 14 and outlet well 18.

In the Figure, the interconnecting well segment 16 may be positioned at any angle within any of the planes ( X-Y ), ( X- (-Y) ) ( (-X)- Y) ( (-X) - (-Y) ), ( X-Z ), ( X- (-Z) ), ( Z- (-X) ), ((-X)- (-Z)), ( Z-Y ), ( Z- (-Y)), ((-Z)-(-Y)) and ((-Z)-Y) and may also be disposed to have an X,Y and Z coordinate for cross plane disposition. For purposes of explanation the positive x axis will represent the inlet well 14. The well may be disposed at any angle alpha or beta in a range which does not impede operation of the well 14. This is equally true for outlet well 18. The inlet wells 14 and outlet wells 18 communicate with the surface ,S, as referenced in respect of Figure 1.

Any number of interconnecting segments16 may be disposed within the space discussed. Other well configurations will be discussed in the advancing Figures. The quantity and spatial positioning will depend on the thermal gradient of the formation 12.

Advantageously, the observation of the drilling by intersection between the inlet well 14 and outlet well 16 by independent drilling operations to form the interconnecting segment 18, the absence of liners, casing, etc. within the interconnecting segment with conditioning of the drilling operation, results in configuration freedom to maximally recover thermal energy.

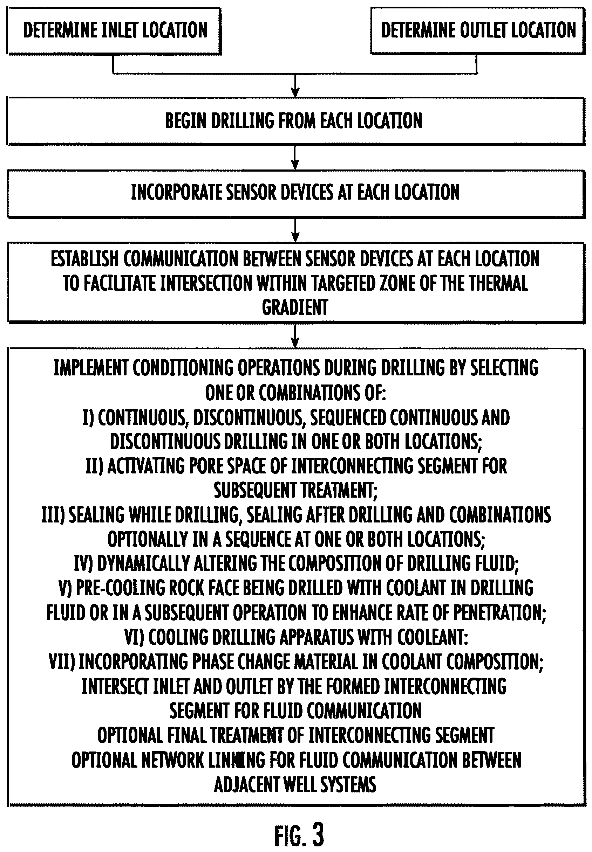

Figure 3 illustrates an example of the steps involved in sensor ranging the inlet well and outlet well in a formation for intersection through the formed interconnecting segment. Although the example references an interconnecting segment, it will be understood that the methodology relates to multiple interconnecting segments formation in any pattern as discussed in respect of Figure 2. The individual interconnecting segments are fully utilizable to have sensor communication there between to guide the drilling of subsequent interconnecting segments with a given well system or those being formed in a proximate system within the formation.

By providing the cross communication between the wells, the inlets, the outlets and interconnecting segments, trajectory drift is minimized to facilitate accurate intersection of the wells being drilled. Sensors may also be utilized in the detritus capture segments 19 , not shown and discussed in greater detail herein after.

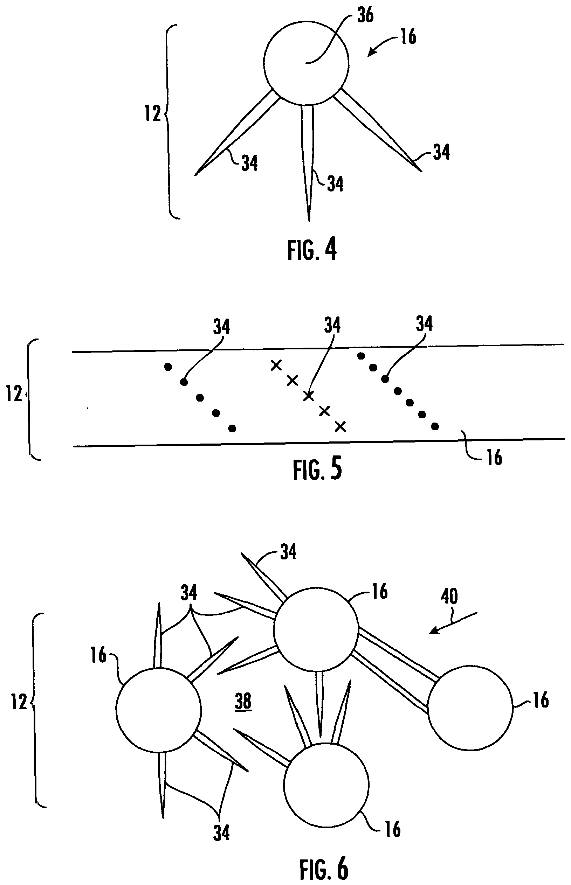

Referring now to Figure 4, a cross section of an interconnecting segment 16 is shown disposed with formation 12. Extending from the segment 16 are or conduits 34 extending into the formation 12. Conduits 34 may be voids either in fluid communication with the interior 36 of segment 16 or sealed without fluid communication with the interior 36. It has been found that the conduits 34 are useful to enhance the thermal recovery capacity of the interconnecting segment when working fluid is circulated there though as well in periods of quiescence. Positioning and quantity of the radially extensions will be dictated by formation characteristics to maximize thermal recovery without structural/mechanical compromise of the segment 16. Where adequate, if pre-existing fissures, cracks, fractures or contained areas of permeability are encountered, they may be used to function as conduits. Theses may also occur during drilling of the segment 16.

Figure 5 illustrates an example where the conduits 34 are arranged in a generally helical pattern with the dotted points representing those extending outwardly from the plane and those crossed points being representative of the extensions on the opposed surface extending away from the plane. This is exemplary; the pattern with be ascertained from gradient data amongst other germane parameters.

Figure 6 illustrates a further example where a plurality of segments 16 are disposed within formation 12. In the example, the extensions 34 of adjacent segments may be arrange in close proximity to fill a given area 38 with extensions to effectively increase the volume of the gradient from which thermal energy may be recovered. The conduits 34 act as a convection cell of buoyancy driven flow which direct thermal energy into the interior 34 of segments 16. The extensions can be arranged for adjacent positioning or interdigitated with other conduits 34.

As a further embodiment, the individual segments 16 may be connected by the conduits 34, the connection being generally denoted by numeral 40.
In this manner, the arrangement has the appearance of a ladder when viewed perspectively.

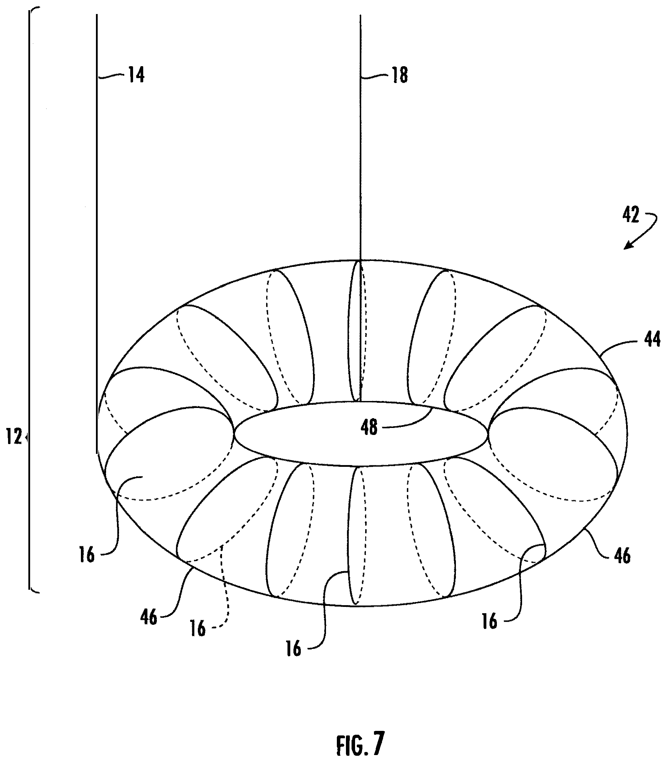

Turning now to the well configuration possibilities, Figure 7 illustrates a generally toroidal well configuration generally denoted by numeral 42 disposed within formation 12.

In this arrangement, inlet well 14 is in fluid communication with a main inlet hub well 44 which is connected to each of the interconnecting segments 16. Suitable valve devices ( not shown, but generally represented by numeral 46 ) may be incorporate in some or all of the looped segments 16 for fluid flow redirection and other control.

The arrangement 42 also includes a main outlet hub well 48 connected in a similar manner as that indicated for main inlet hub well 46 with a similar valving feature ( not shown ).

Within the structure, each looped segment 16 may be operated as a single unit to recover thermal energy.

As an operational alternative, the flow of working fluid within arrangement 42 may be circulated in a generally helical pattern through the whole arrangement with sequencing of periods of quiescence to allow for maximum thermal recovery. Such flexibility allows for connection to, for example the energy processing device 20. This facilitates on demand power when the energy is converted to electricity and overcomes the limitations associated with baseload power peak delivery issues.

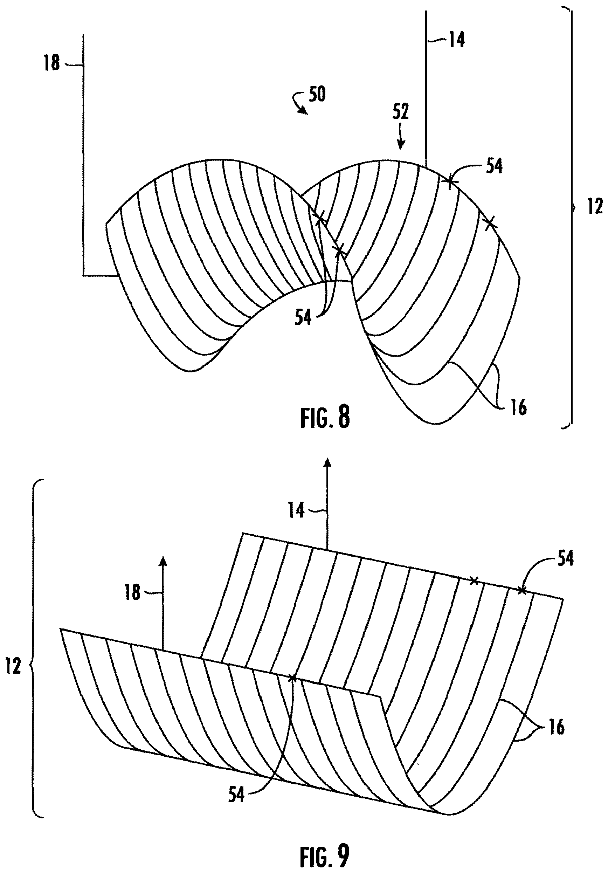

Figure 8 illustrates a further embodiment of a well configuration denoted by numeral 50. The general shape is that of a saddle where the interconnecting looped segments are adjacent one another with an arcuate presentation. The inlet well 14 may be connected to each of the looped segments 16 in a hub or manifold arrangement 52 or valved at 54 for selective operation. In a similar manner, outlet 18 may connected in the same fashion.

Figure 9 illustrates yet another possible variation generally in the form of an inverted parabola.

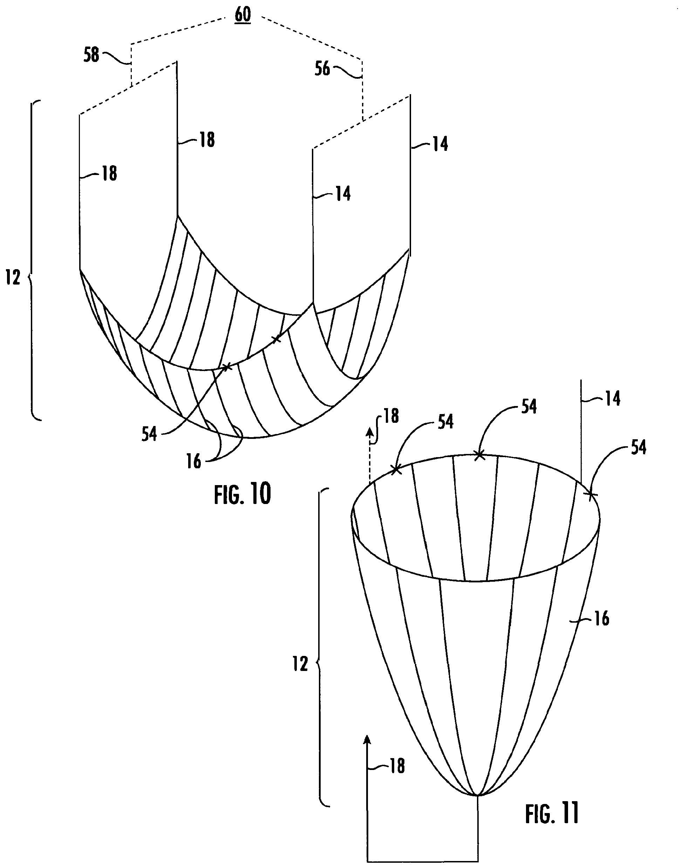

Figure 10 illustrates another well system configuration where the inlets 14 may be singular from distant points in the configuration or joined at 56. Similarly, outlets 18 may be combined at 58. For colocation, the outlets 58 and inlets 56 may be extended for geographic proximity.

Figure 11 illustrates a general cone shaped configuration where the outlet well 18 may be at the bottom portion of the configuration or the top as shown in dashed line. The lower parts of the looped segments 16 may be connected together or independent.

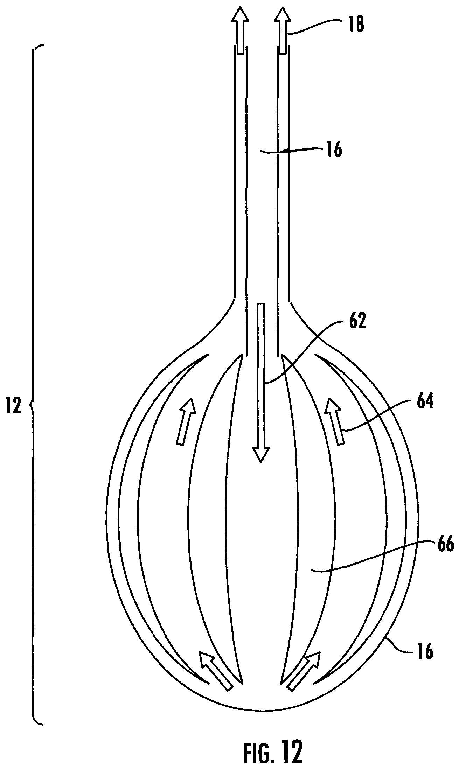

Figure 12 illustrates yet another configuration in the general form of a whisk. In this embodiment, the segment loops 16 may have a concentric inlet 14 and outlet 18 with fluid flow from the inlet in the direction of arrow 62 and outlet flow at 64. This arrangement allows for a large volume of the formation to be " mined" for heat in the formation 12 outside of the configuration and in the formation volume 66 within the configuration. One of the advantages with this configuration are that all of the intersections happen with a single borehole or "mother bore" and electromagnetic signalling can be simplified, even accomplished with permanent devices placed in the mother bore or passively. Another advantage is only a single vertical bore is required to house both the inlet and outlet flow streams.

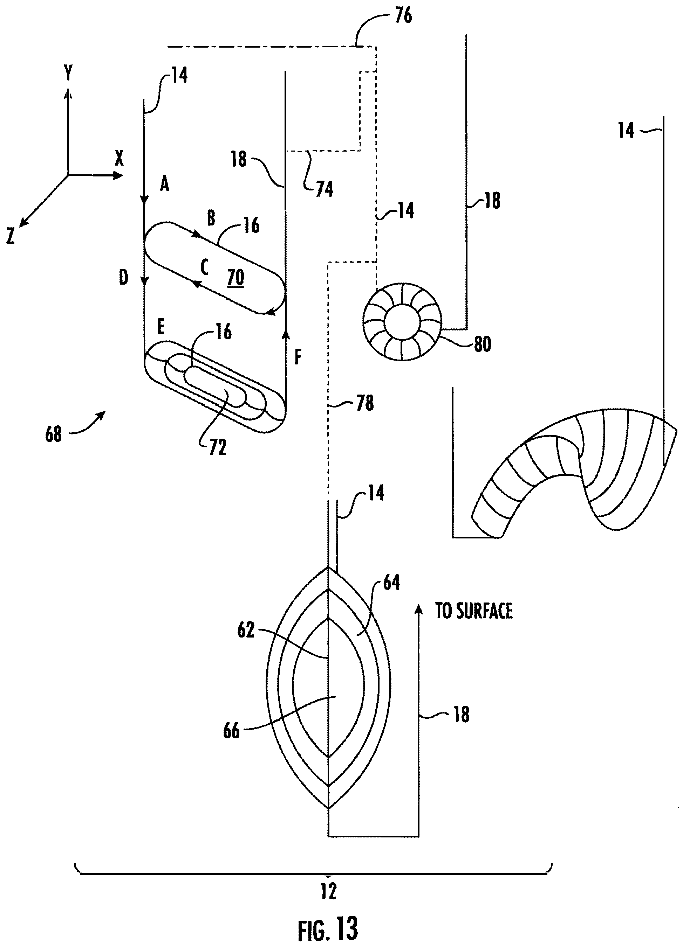

Turning to Figure 13, a wellbore system sector is schematically depicted generally denoted by numeral 68. Sector 68 is within a thermally productive formation 12, with the positioning of different wellbore configurations positioned in predetermined zones to maximize gradient coverage. In the example, the sector 68 provides a stacked and spaced arrangement of looped segments 16 sharing a common inlet well 14 and common outlet well 18.

Depending on the parameters, fluid circulation may follow the pattern denoted A through F. In this manner, at least a portion of heated fluid from top looped segments 70 may preheat the fluid entering bottom looped segments 72. Alternatively, each of the looped segments 70 and 72 can be operated independently.

In respect of the remaining configurations, the toroidal configuration 80 may receive heated fluid from the outlet 18 of the stacked arrangement 70, 72 as denoted by the dashed lines 74 or simply have an independent inlet well 14 denoted by the chain line 76.

The whisk configuration may have an independent inlet well 14 and a bottom positioned outlet well 18 or the inlet well may be common with that of the toroidal configuration as denoted by numeral 78.

Finally, the saddle configuration may include a common outlet well with the toroidal configuration at 80.

It will be understood that all inlet wells 14 and outlet wells 18 will extend to the surface or conversion device 20 (Figure 1) for operation. In the Figure 13, the wells 14,18 are truncated for purposes of clarity in the illustration.

The sector 68 is exemplary only as are the wellbore configurations and common and independent combinations. With the intersecting directional drilling, the conditioning operations and sensor guided drilling, any pattern or configuration can be synthesized to exploit even the most irregular, disparate multizonal gradient distributions. All of these features when unified with the fact that the instant technology does not include piping liners or other mechanical arrangements within the heat recovering interconnecting segments, immediately removes geometric constraints for the configurations thus allowing the mining of any gradient in any rock formation.

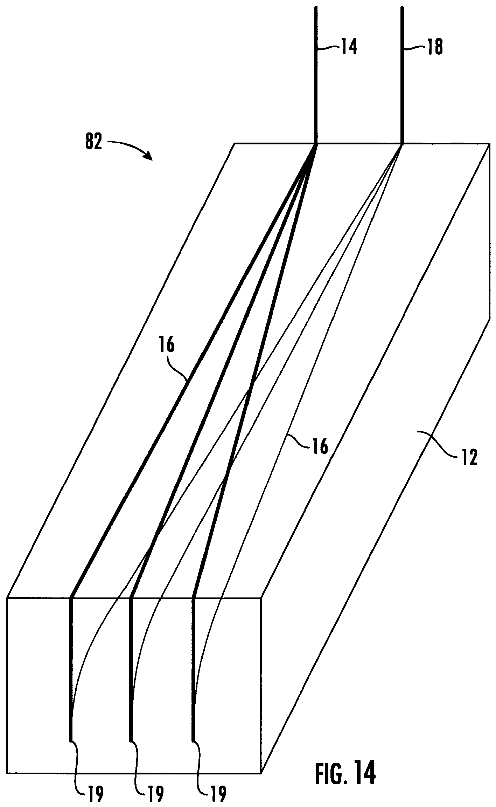

Figure 14 is another example of a well arrangement 82 to recover thermal energy from a specific volume of the formation 12. In the example, the detritus segments 19 may include sensors 84 to transmit information regarding detritus accretion. In this manner, the working fluid may be compositionally altered to incorporate chemical additives to mitigate/repair any compromised areas with the well system.
The arrangement of the interconnecting segments 16 may disposed in a spaced array as shown to recover thermal energy.

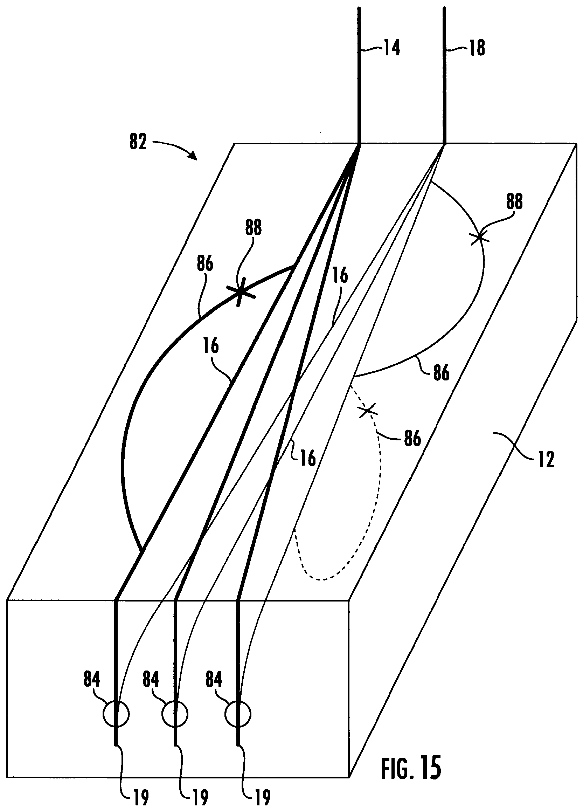

Further, as illustrated in Figure 15 auxiliary segments 86 may be in fluid communication with a respective segment 16 to which it is attached and incorporate a valve mechanism 88 to allow for selective operation. The auxiliary segments 88 may be used to store heated working fluid selectively used as a thermal driver in the arrangement for the well system in the example or used via suitable interconnection to another well system ( not shown in this Figure) . As illustrated, the auxiliary segments 86 may be positioned in a coplanar disposition with the segment to which it is attached or in an orthogonal plane as shown in dashed lines in the Figure. Suitable variations to this are envisioned depending on the gradient features.

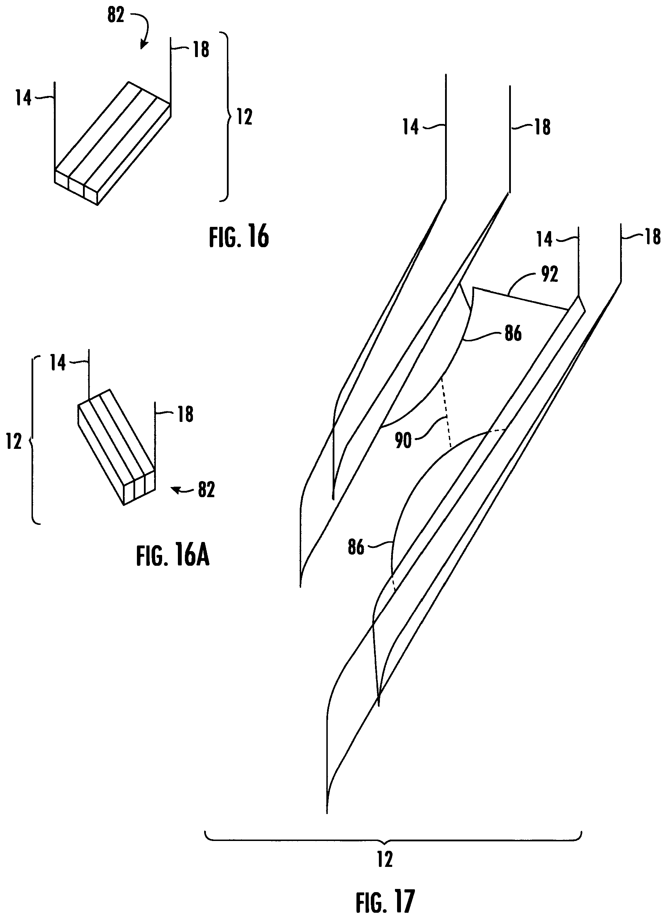

Figures 16 and 16 A illustrate grouped well systems 82 in different angular dispositions with in the formation. In the grouped configurations, the systems 82 are modularized within a specific volume of the formation 12 thus allowing for a small footprint and convenient general co-location of the inlet well 14 and outlet well 18. Within the module, inlet wells 14 and outlet wells may be common to individual well systems or common for all modules in the system 82.

Figure 17 provides for the possibility of interconnecting auxiliary segments 86 between adjacent wells at 90 or thermal supplementation from one outlet 18 to an inlet 14 of an adjacent well.

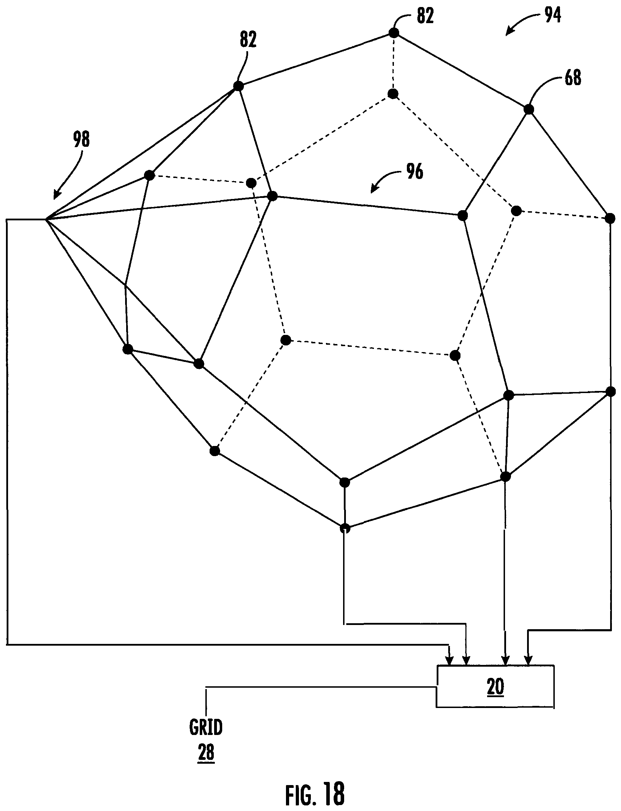

In Figure 18 a network depicted is intended to convey the feature that the energy produced within any well system 82 can be taken directly for other uses through the energy producing apparatus 20 associated with that system 82, combined from one system 82 to another 82 as denoted by numeral 96 or further grouped as denoted by numeral 98 for eventual use on the electrical grid 28 to provide on demand power regardless of quantitative demand.

## Claims

1. A closed-loop geothermal well system (10) for geothermal heat recovery from a subterranean geothermal zone, comprising:
an inlet well (14) extending from the terranean surface to the geothermal zone;
an outlet well (18) extending from the terranean surface to the geothermal zone;
a first lateral well (16) extending out from the inlet well and sloping downward into the geothermal zone; and
a second lateral well (16) extending out from the outlet well and sloping downward into the geothermal zone at a different depth than the first lateral well, a downhole end of the first lateral well coupled to a downhole end of the second lateral well at a detritus capture segment (19), the detritus capture segment (19)being at a greater depth than a downhole end of the inlet well and a downhole end of the outlet well, to allow fluid to circulate from the inlet well to the first lateral well, from the first lateral well to the second lateral well and from the second lateral well to the outlet well.

2. The closed-loop geothermal well of claim 1, where the inlet well and the outlet well are co-located at the terranean surface.

3. The closed-loop geothermal well of claim 1 or claim 2, comprising:
casing in the inlet well; and
casing in the outlet well.

4. The closed-loop geothermal well of any preceding claim, wherein the first lateral well and the second lateral well are not cased or lined.

5. The closed-loop geothermal well of any of the preceding claims, comprising a plurality of first lateral wells extending out from the inlet well and sloping downward into the geothermal zone and a plurality of second lateral wells extending out from the outlet well and sloping downward into the geothermal zone, and where respective pairs of first and second lateral wells are coupled to each other at respective detritus capture segments, each of the respective detritus capture segments being at a greater depth than a downhole end of the inlet well and a downhole of the outlet well, wherein, optionally, the inlet well and the outlet well are co-located at the terranean surface.

6. The closed-loop geothermal well of any of the preceding claims, comprising a sloped well segment where the first and second lateral wells couple, the sloped well segment inclined more steeply than the remainder of the well having the sloped well segment.

7. The closed-loop geothermal well of any of the preceding claims, where the inlet well and the outlet well reside at a surface site; and comprising:
a second inlet well extending from the terranean surface to the geothermal zone and residing at the surface site;
a second outlet well extending from the terranean surface to the geothermal zone and residing at the surface site;
a third lateral well extending out from the second inlet well into the geothermal zone; and
a fourth lateral well extending out from the second outlet well into the geothermal zone at a different depth than the third lateral well, wherein ends of the third and fourth lateral wells are coupled, opposite the second inlet and second outlet wells, to allow fluid to circulate from the second inlet well to the third lateral well, from the third lateral well to the fourth lateral well and from the fourth lateral well to the second outlet well.

8. A method for forming a closed-loop geothermal well (10) in a subterranean geothermal zone, comprising:
drilling a first lateral well (16) extending out from an inlet well (14) and sloping downward into the geothermal zone, the inlet well extending from the terranean surface; and
drilling, at a different depth than the first lateral well, a second lateral well (16) extending out from an outlet well (18) and sloping downward into the geothermal zone to couple to the first lateral well at a detritus capture segment (19), the detritus capture segment being at a greater depth than a downhole end of the inlet well and a downhole end of the outlet well, to allow fluid to circulate from the inlet well to the first lateral well, from the first lateral well to the second lateral well, and from the second lateral well to the outlet well, the outlet well extending from the terranean surface.

9. The method of claim 8, comprising:
drilling and casing the inlet well;
drilling and casing the outlet well; and
not casing or lining the first lateral well and the second lateral well.

10. The method of claim 8 or 9, comprising:
drilling a plurality of first lateral wells from the inlet well into the geothermal zone; and
drilling a plurality of second lateral wells from the outlet well into the geothermal zone to each couple to a respective one of the first lateral wells at respective detritus capture segments.

11. The method of any of the preceding claims 8-10,
further comprising drilling a sloped well segment where the first and second lateral wells couple, wherein the sloped well segment is inclined more steeply than the remainder of the well having the sloped well segment.

12. The method of any of the preceding claims 8-11, comprising:
drilling the inlet well at a surface site;
drilling the outlet well at the surface site;
drilling a second inlet well at the surface site;
drilling a second outlet well at the surface site;
drilling a third lateral well from the second inlet well into the geothermal zone; and
drilling, at a different depth than the third lateral well, a fourth lateral well from the second outlet well into the geothermal zone to the third lateral well to allow fluid to circulate from the second inlet well to the third lateral well, from the third lateral well to the fourth lateral well, and from the fourth lateral well to the second outlet well.

## Patentansprüche

1. Geothermie-Bohrlochsystem (10) mit geschlossenem Kreislauf zur geothermischen Wärmerückgewinnung aus einer unterirdischen geothermischen Zone, das Folgendes umfasst:
ein Einlassbohrloch (14), das sich von der Bodenoberfläche zu der geothermischen Zone erstreckt;
einen Auslassbohrloch (18), das sich von der Bodenoberfläche zu der geothermischen Zone erstreckt;
ein erstes seitliches Bohrloch (16), das sich aus dem Einlass-Bohrloch heraus erstreckt und nach unten in die geothermische Zone neigt; und
ein zweites seitliches Bohrloch (16), das sich aus dem Auslassbohrloch heraus erstreckt und in einer anderen Tiefe als das erste seitliche Bohrloch nach unten in die geothermische Zone neigt, wobei ein lochabwärtiges Ende des ersten seitlichen Bohrlochs an einem Detritus-Fangsegment (19) mit einem lochabwärtigen Ende des zweiten seitlichen Bohrlochs gekoppelt ist, wobei das Detritus-Fangsegment (19) in einer größeren Tiefe liegt als ein lochabwärtiges Ende des Einlassbohrlochs und ein lochabwärtiges Ende des Auslassbohrlochs, um zu ermöglichen, dass Fluid von dem Einlassbohrloch zu dem ersten seitlichen Bohrloch, von dem ersten seitlichen Bohrloch zu dem zweiten seitlichen Bohrloch und von dem zweiten seitlichen Bohrloch zu dem Auslassbohrloch zirkuliert.

2. Geothermie-Bohrloch mit geschlossenem Kreislauf nach Anspruch 1, wobei das Einlassbohrloch und das Auslassbohrloch gemeinsam an der Bodenoberfläche angeordnet sind.

3. Geothermie-Bohrloch mit geschlossenem Kreislauf nach Anspruch 1 oder Anspruch 2, das Folgendes umfasst:
Verrohrung in dem Einlassbohrloch; und
Verrohrung in dem Auslassbohrloch.

4. Geothermie-Bohrloch mit geschlossenem Kreislauf nach einem der vorhergehenden Ansprüche, wobei das erste seitliche Bohrloch und das zweite seitliche Bohrloch nicht verrohrt oder ausgekleidet sind.

5. Geothermie-Bohrloch mit geschlossenem Kreislauf nach einem der vorhergehenden Ansprüche, das mehrere erste seitliche Bohrlöcher, die sich aus dem Einlassbohrloch heraus erstrecken und nach unten in die geothermische Zone neigen, und mehrere zweite seitliche Bohrlöcher, die sich aus dem Auslassbohrloch heraus erstrecken und nach unten in die geothermische Zone neigen, umfasst, und wobei jeweilige Paare von ersten und zweiten seitlichen Bohrlöchern an jeweiligen Detritus-Fangsegmenten miteinander gekoppelt sind, wobei jedes der jeweiligen Detritus-Fangsegmente in einer größeren Tiefe liegen als ein lochabwärtiges Ende des Einlassbohrlochs und ein lochabwärtiges Ende des Auslassbohrlochs, wobei optional das Einlassbohrloch und das Auslassbohrloch gemeinsam an der Bodenoberfläche angeordnet sind.

6. Geothermie-Bohrloch mit geschlossenem Kreislauf nach einem der vorhergehenden Ansprüche, das ein geneigtes Bohrlochsegment umfasst, in dem sich das erste und das zweite seitliche Bohrloch koppeln, wobei das geneigte Bohrlochsegment steiler geneigt ist als der Rest des Bohrlochs, das das geneigte Bohrlochsegment aufweist.

7. Geothermie-Bohrloch mit geschlossenem Kreislauf nach einem der vorhergehenden Ansprüche, wobei sich das Einlassbohrloch und das Auslassbohrloch an einer Oberflächenstelle befinden; und umfassend:
ein zweites Einlassbohrloch, das sich von der Bodenoberfläche zu der geothermischen Zone erstreckt und sich an der Oberflächenstelle befindet;
ein zweites Auslassbohrloch, das sich von der Bodenoberfläche zu der geothermischen Zone erstreckt und sich an der Oberflächenstelle befindet;
ein drittes seitliches Bohrloch, das sich aus dem zweiten Einlassbohrloch heraus in die geothermische Zone erstreckt; und
ein viertes seitliches Bohrloch, das sich in einer anderen Tiefe als das dritte seitliche Bohrloch aus dem zweiten Auslassbohrloch heraus in die geothermische Zone erstreckt, wobei Enden des dritten und des vierten seitlichen Bohrlochs gegenüber dem zweiten Einlass- und dem zweiten Auslassbohrloch gekoppelt sind, um zu ermöglichen, dass Fluid von dem zweiten Einlassbohrloch zu dem dritten seitlichen Bohrloch, von dem dritten seitlichen Bohrloch zu dem vierten seitlichen Bohrloch und von dem vierten seitliche Bohrloch zu dem zweiten Auslassbohrloch zirkuliert.

8. Verfahren zum Bilden eines Geothermie-Bohrlochs (10) mit geschlossenem Kreislauf in einer unterirdischen geothermischen Zone, das Folgendes umfasst:
Bohren eines ersten seitlichen Bohrlochs (16), das sich aus einem Einlassbohrloch (14) heraus erstreckt und nach unten in die geothermische Zone neigt, wobei sich das Einlassbohrloch von der Bodenoberfläche erstreckt; und
Bohren, in einer anderen Tiefe als das erste seitliche Bohrloch, eines zweiten seitlichen Bohrlochs (16), das sich aus einer Auslassbohrung (18) heraus erstreckt und nach unten in die geothermische Zone neigt, um sich mit dem ersten seitlichen Bohrloch an einem Detritus-Fangsegment (19) zu koppeln, wobei das Detritus-Fangsegment in einer größeren Tiefe liegt als ein lochabwärtiges Ende der Einlassbohrung und ein lochabwärtiges Ende der Auslassbohrung, um zu ermöglichen, dass Fluid von dem Einlassbohrloch zu dem ersten seitlichen Bohrloch, von dem ersten seitlichen Bohrloch zu dem zweiten seitlichen Bohrloch und von dem zweiten seitlichen Bohrloch zu dem Auslassbohrloch zirkuliert, wobei sich das Auslassbohrloch von der Bodenoberfläche erstreckt.

9. Verfahren nach Anspruch 8, das Folgendes umfasst:
Bohren und Verrohren des Einlassbohrlochs;
Bohren und Verrohren des Auslassbohrlochs; und
Nicht-Verrohren oder -Auskleiden des ersten seitlichen Bohrlochs und des zweiten seitlichen Bohrlochs.

10. Verfahren nach Anspruch 8 oder 9, das ferner Folgendes umfasst:
Bohren mehrerer erster seitlicher Bohrlöcher von dem Einlassbohrloch in die geothermische Zone; und
Bohren mehrerer zweiter seitlicher Bohrlöcher von dem Auslassbohrloch in die geothermische Zone, um sich jeweils an jeweiligen Detritus-Fangsegmenten mit einem jeweiligen der ersten seitlichen Bohrlöcher zu koppeln.

11. Verfahren nach einem der vorhergehenden Ansprüche 8-10,
das ferner Bohren eines geneigten Bohrlochsegments umfasst, in dem sich das erste und das zweite seitliche Bohrloch koppeln, wobei das geneigte Bohrlochsegment steiler geneigt ist als der Rest des Bohrlochs, das das geneigte Bohrlochsegment aufweist.

12. Verfahren nach einem der vorstehenden Ansprüche 8-11, das ferner Folgendes umfasst:
Bohren des Einlassbohrlochs an einer Oberflächenstelle;
Bohren des Auslassbohrlochs an der Oberflächenstelle;
Bohren eines zweiten Einlassbohrlochs an der Oberflächenstelle;
Bohren eines zweiten Auslassbohrlochs an der Oberflächenstelle;
Bohren eines dritten seitlichen Bohrlochs von dem zweiten Einlassbohrloch in die geothermische Zone; und
Bohren, in einer anderen Tiefe als das dritte seitliche Bohrloch, eines vierten seitlichen Bohrlochs von dem zweiten Auslassbohrloch in die geothermische Zone zu dem dritten seitlichen Bohrloch, um zu ermöglichen, dass Fluid von dem zweiten Einlassbohrloch zu dem dritten seitlichen Bohrloch, von dem dritten seitlichen Bohrloch zu dem vierten seitlichen Bohrloch und von dem vierten seitlichen Bohrloch zu dem zweiten Auslassbohrloch zirkuliert.

## Revendications

1. Système de puits géothermiques (10) en boucle fermée pour la récupération de chaleur géothermique d'une zone géothermique souterraine, comprenant :
un puits d'entrée (14) s'étendant depuis la surface terrestre jusqu'à la zone géothermique ;
un puits de sortie (18) s'étendant depuis la surface terrestre jusqu'à la zone géothermique ;
un premier puits latéral (16) s'étendant à partir du puits d'entrée et s'inclinant vers le bas dans la zone géothermique ; et
un deuxième puits latéral (16) s'étendant à partir du puits de sortie et s'inclinant vers le bas dans la zone géothermique à une profondeur différente de celle du premier puits latéral, une extrémité de fond de trou du premier puits latéral accouplée à une extrémité de fond de trou du deuxième puits latéral au niveau d'un segment de capture de détritus (19), le segment de capture de détritus (19) étant à une profondeur supérieure à une extrémité de fond de trou du puits d'entrée et à une extrémité de fond de trou du puits de sortie, pour permettre au fluide de circuler du puits d'entrée au premier puits latéral, du premier puits latéral au deuxième puits latéral et du deuxième puits latéral au puits de sortie.

2. Puits géothermique en boucle fermée selon la revendication 1, le puits d'entrée et le puits de sortie étant co-situés au niveau de la surface terrestre.

3. Puits géothermique en boucle fermée selon la revendication 1 ou la revendication 2, comprenant :
un tubage dans le puits d'entrée ; et
un tubage dans le puits de sortie.

4. Puits géothermique en boucle fermée selon l'une quelconque des revendications précédentes, le premier puits latéral et le deuxième puits latéral n'étant ni tubés ni chemisés.

5. Puits géothermique en boucle fermée selon l'une quelconque des revendications précédentes, comprenant une pluralité de premiers puits latéraux s'étendant à partir du puits d'entrée et s'inclinant vers le bas dans la zone géothermique et une pluralité de seconds puits latéraux s'étendant à partir du puits de sortie et s'inclinant vers le bas dans la zone géothermique, et des paires respectives de premier et deuxième puits latéraux étant accouplées l'une à l'autre au niveau de segments de capture de détritus respectifs, chacun des segments de capture de détritus respectifs étant à une profondeur plus grande qu'une extrémité de fond de trou du puits d'entrée et qu'un fond du puits de sortie, le puits d'entrée et le puits de sortie étant éventuellement co-situés au niveau de la surface terrestre.

6. Puits géothermique en boucle fermée selon l'une quelconque des revendications précédentes, comprenant un segment de puits incliné où les premier et deuxième puits latéraux s'accouplent, le segment de puits incliné étant incliné plus fortement que le reste du puits ayant le segment de puits incliné.

7. Puits géothermique en boucle fermée selon l'une quelconque des revendications précédentes, le puits d'entrée et le puits de sortie résidant au niveau d'un site de surface ; et comprenant :
un second puits d'entrée s'étendant de la surface terrestre à la zone géothermique et résidant au niveau du site de surface ;
un second puits de sortie s'étendant de la surface terrestre à la zone géothermique et résidant au niveau du site de surface ;
un troisième puits latéral s'étendant à partir du second puits d'entrée dans la zone géothermique ; et
un quatrième puits latéral s'étendant à partir du second puits de sortie dans la zone géothermique à une profondeur différente de celle du troisième puits latéral, les extrémités des troisième et quatrième puits latéraux étant accouplées, à l'opposé du second puits d'entrée et du second puits de sortie, pour permettre au fluide de circuler du second puits d'entrée au troisième puits latéral, du troisième puits latéral au quatrième puits latéral et du quatrième puits latéral au second puits de sortie.

8. Procédé de formation d'un puits géothermique (10) en boucle fermée dans une zone géothermique souterraine comprenant :
le forage d'un premier puits latéral (16) s'étendant à partir d'un puits d'entrée (14) et s'inclinant vers le bas dans la zone géothermique, le puits d'entrée s'étendant à partir de la surface terrestre ; et
le forage, à une profondeur différente de celle du premier puits latéral, d'un deuxième puits latéral (16) s'étendant à partir d'un puits de sortie (18) et s'inclinant vers le bas dans la zone géothermique pour s'accoupler au premier puits latéral au niveau d'un segment de capture de détritus (19), le segment de capture de détritus étant à une profondeur plus grande qu'une extrémité de fond de trou du puits d'entrée et qu'une extrémité de fond de trou du puits de sortie, pour permettre à un fluide de circuler du puits d'entrée au premier puits latéral, du premier puits latéral au deuxième puits latéral, et du deuxième puits latéral au puits de sortie, le puits de sortie s'étendant à partir de la surface terrestre.

9. Procédé selon la revendication 8, comprenant :
le forage et le tubage du puits d'entrée ;
le forage et le tubage du puits de sortie ; et
aucun tubage ou chemisage du premier puits latéral et du deuxième puits latéral.

10. Procédé de la revendication 8 ou 9, comprenant :
le forage d'une pluralité de premiers puits latéraux depuis le puits d'entrée dans la zone géothermique ; et
le forage d'une pluralité de deuxièmes puits latéraux à partir du puits de sortie dans la zone géothermique pour chaque accouplement à un puits respectif des premiers puits latéraux au niveau de segments de capture de détritus respectifs.

11. Procédé selon l'une quelconque des revendications précédentes 8 à 10,
comprenant en outre le forage d'un segment de puits incliné où les premier et deuxième puits latéraux s'accouplent, le segment de puits incliné étant incliné plus fortement que le reste du puits ayant le segment de puits incliné.

12. Procédé selon l'une quelconque des revendications précédentes 8 à 11, comprenant :
le forage du puits d'entrée au niveau d'un site de surface ;
le forage du puits de sortie au niveau du site de surface ;
le forage d'un second puits d'entrée au niveau du site de surface ;
le forage d'un second puits de sortie au niveau du site de surface ;
le forage d'un troisième puits latéral à partir du second puits d'entrée dans la zone géothermique ; et
le forage, à une profondeur différente de celle du troisième puits latéral, d'un quatrième puits latéral du second puits de sortie dans la zone géothermique au troisième puits latéral pour permettre au fluide de circuler du second puits d'entrée au troisième puits latéral, du troisième puits latéral au quatrième puits latéral et du quatrième puits latéral au second puits de sortie.
